# EUROPEAN PATENT APPLICATION

(11) **EP 1 884 926 A2**
(43) Date of publication of application: **06.02.2008**
(21) Application number: 07104535.5
(22) Date of filing: 20.03.2007
(51) Int. Cl.: G11B 5/39, G11B 5/31, G11B 5/40

(54) **Magnetic sensors and memory devices**

(30) Priority: 24.01.2007 JP 2007014328; 28.07.2006 JP 2006205987
(71) Applicant: Fujitsu Ltd., Kawasaki-shi, Kanagawa 211-8588 (JP)
(72) Inventor: Kitajima, Masamitsu, Nakahara-ku Kawasaki-shi Kanagawa 211-8588 (JP)
(74) Representative: Hitching, Peter Matthew

(57) **Abstract**

The present invention provides a tunnel-effect type magnetoresistive head (120) which can prevent degradation of a tunnel-effect type magnetoresistive effect element caused by contact with a magnetic recording medium without degrading a shielding effect. In this tunnel-effect type magnetoresistive head (120), for the above purpose, an exposed surface area of a shield and electrode layer, which is viewed from an air bearing surface, is decreased, and a shield layer is also provided outside the shield and electrode layer.

## Description

The present invention relates to magnetic sensors reproducing magnetic information from magnetic disks.

A magnetic disk apparatus has been required to increase its memory capacity, and a recording density of a magnetic disk has been increased. In order to increase the recording density, a region between bits of a magnetic disk must be decreased so as to increase the number of signals to be recorded. However, when the region between bits is decreased, the size of a magnet which forms the region between bits is decreased, and as a result, a magnetic flux generated from the magnet is also decreased. Hence, the magnetic flux cannot be supplied to a magnetic sensor unless a flying height of a magnetic head is decreased.

When the flying height of the magnetic head is decreased, an air bearing surface thereof is liable to be brought into contact with the magnetic disk. When the air bearing surface is brought into contact with the magnetic disk, heat is generated thereby. When the heat thus generated is transmitted to the magnetic sensor, for example, the magnetic sensor may be damaged, and signals read thereby may carry noise, so that the quality of read signals is degraded.

As related-art documents on magnetic sensors, Japanese Unexamined Patent Application Publication Nos. 2000-215415 and 2002-026423 may be mentioned by way of example.

In order to suppress the generation of heat, for example, a method may be conceived in which the width of a shield and electrode layer, which is used as both a shield layer and an electrode and which forms a magnetic sensor, is decreased to decrease its contact surface area to be brought into contact with a magnetic disk. However, when the width of the shield and electrode layer is decreased, a shielding effect for shielding a magnetoresistive effect element from a magnetic flux generated from the magnetic disk is degraded.

According to an embodiment of an aspect of the present invention, there is provided a magnetic sensor having a magnetoresistive element for obtaining information on the basis of a magnitude of magnetic flux generated from a medium. The magnetic sensor includes two electrode layers composed of a magnetic material, sandwiching the magnetoresistive element, for applying a current to the magnetoresistive element, at least one shield layer for shielding the magnetroresistive element from the magnetic flux, located opposite to a surface of at least one of the electrode layers facing the magnetoresistive element, and at least one insulating layer for thermally insulating said magnetroresistive element from the shield layer, located between said at least one of the electrode layers and the

According to embodiments of the present invention, the width of the electrode layer (which is also used as a shield layer) is decreased, and the shield layer is disposed at a side opposite to a surface of the above electrode layer, which faces the magnetoresistive effect element, with the insulating layer provided therebetween. Hence, even when an air bearing surface of the magnetic head is brought into contact with a magnetic disk, heat generated from the electrode layer is small, and heat generated from the shield layer is not easily transmitted to the magnetoresistive effect element because of the presence of the insulating layer. Furthermore, besides the electrode layer, the shield layer is provided, and hence the shield effect can be improved.

Reference will now be made, by way of example, to the accompanying drawings, of which:
Fig. 1 is a perspective view of a magnetic disk apparatus according to an embodiment of the present invention;
Fig. 2 is a schematic view showing the positional relationship among a suspension, a slider, and a magnetic head;
Fig. 3 is a cross-sectional view of a magnetic head according to Embodiment 1 of the present invention;
Fig. 4 is a view of the magnetic head according to Embodiment 1 of the present invention, which is viewed from a recording medium side;
Fig . 5 is a schematic view showing the structure of a magnetoresistive effect element;
Fig. 6 is a schematic view showing the structure of a pinned layer;
Fig. 7 is a cross-sectional view of a magnetic head according to Embodiment 2 of the present invention;
Fig. 8 is a view of the magnetic head according to Embodiment 2 of the present invention, which is viewed from a recording medium side;
Fig. 9 is a cross-sectional view showing a magnetic head;
Fig. 10 is a view of the magnetic head in Fig. 9, which is viewed from a recording medium side;
Fig. 11 is a cross-sectional view of a magnetic head according to a modified embodiment of the present invention; and
Fig. 12 is a view of the magnetic head according to the modified embodiment of the present invention, which is viewed from a recording medium side.

### Embodiment 1:

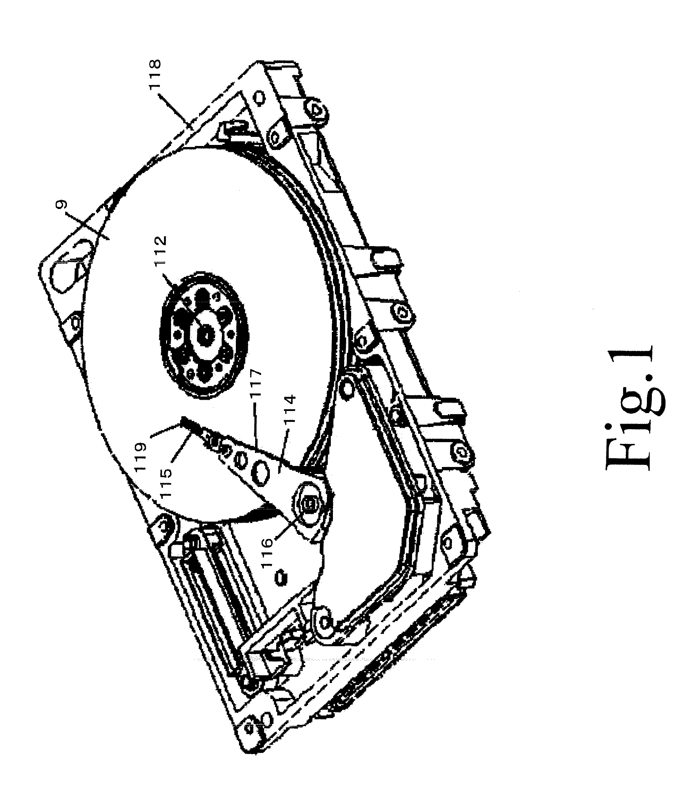

Fig. 1 is a perspective view of a magnetic disk apparatus. A magnetic disk 9 includes magnetic information and is rapidly rotated by a spindle motor 112. An actuator arm 114 is provided with a suspension 115 made of stainless steel. In addition, the actuator arm 114 is rotatably fixed to a housing 118 by a shaft 116 and is moved in a radius direction of the magnetic disk 9. Accordingly, a slider 119 fitted to the suspension 115 is moved over the magnetic disk 9, so that recording and reproducing of information are performed on a track. In the housing 118, a detection circuit device detecting a reproduced signal is fixed. The detection circuit device supplies a sense current to a magnetoresistive effect element in a read portion of a magnetic head and measures the change in voltage of the magnetoresistive effect element, so that information is reproduced from the magnetic disk 9.

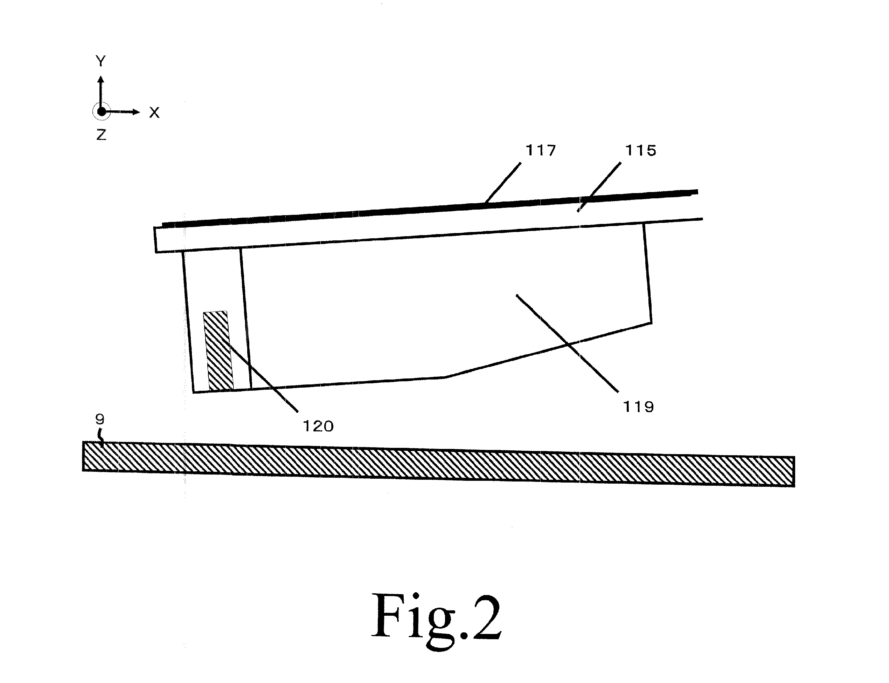

Fig. 2 is a schematic view showing the positional relationship among the magnetic disk 9, the suspension 115, the slider 119, and a magnetic head 120. The slider 119 is fitted to the suspension 115 to form a head suspension assembly. When the magnetic disk 9 is rapidly rotated, air is introduced between the slider 119 and the magnetic disk 9, so that the slider 119 is floated. The magnetic head 120 formed at the front end of the slider 119 is electrically connected to the detection circuit device via an insulated lead line provided on the suspension 115 and the actuator arm 114. For reading information recorded on the magnetic disk 9, a magnetoresistive effect element of the magnetic head 120 is used. That is, a leak magnetic field from a recording track of the magnetic disk 9 is received by the slider 119 and is then allowed to flow into the magnetoresistive effect element.

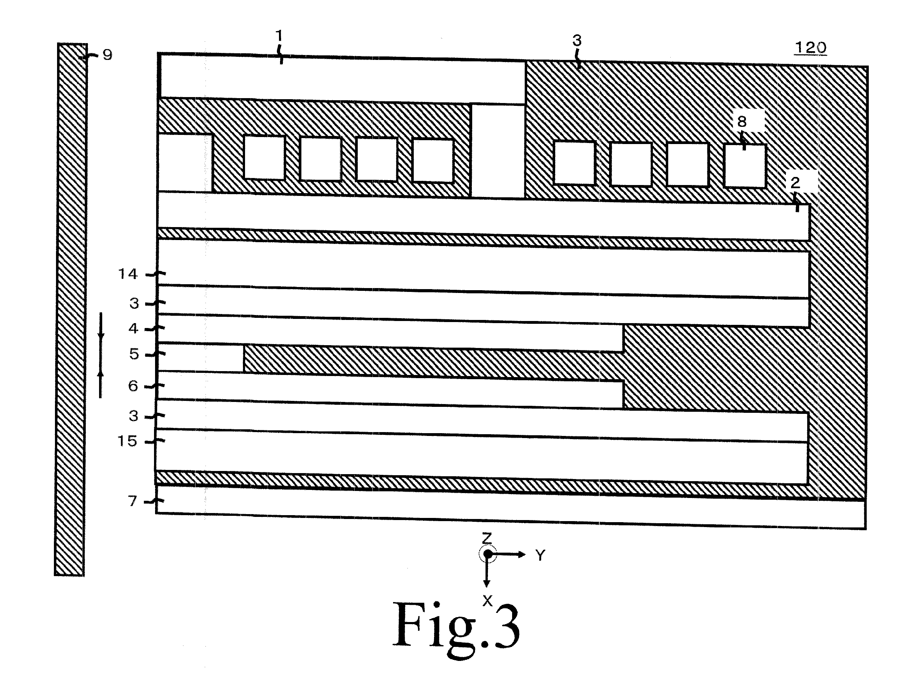

Fig. 3 is a cross-sectional view the magnetic head 120 taken along a direction perpendicular to an air bearing surface thereof. In this magnetic head 120, a lower shield and electrode layer (which is used as both a shield layer and an electrode) 6 and an upper shield and electrode layer (which is used as both a shield layer and an electrode) 4 are formed on a substrate 7 made of AlTiC (Al₂O₃-TiC) to sandwich a magnetoresistive effect element 5 in a lamination direction. In addition, a lower shield layer 15 and an upper shield layer 14 are formed outside the lower shield and electrode layer 6 and the upper shield and electrode layer 4, respectively. On the upper shield layer 14, a lower magnetic pole 2 of a write head is formed, and a writing coil 8 and an upper magnetic pole 1 are also formed, so that the magnetic head 120 is formed.

The lower shield layer 15, the lower shield and electrode layer 6, the magnetoresistive effect element 5, the upper shield and electrode layer 4, and the upper shield layer 14 form the read portion. In addition, the lower magnetic pole 2, the coil 8, and the upper magnetic pole 1 form a write portion. The lower shield layer 15, the lower shield and electrode layer 6, the upper shield and electrode layer 4, the upper shield layer 14, and the lower magnetic pole 2 are sequentially formed by patterning and are laminated with insulating layers of alumina (Al₂O₃) or the like provided therebetween. In addition, in Fig. 3, particularly necessary insulating layers are shown.

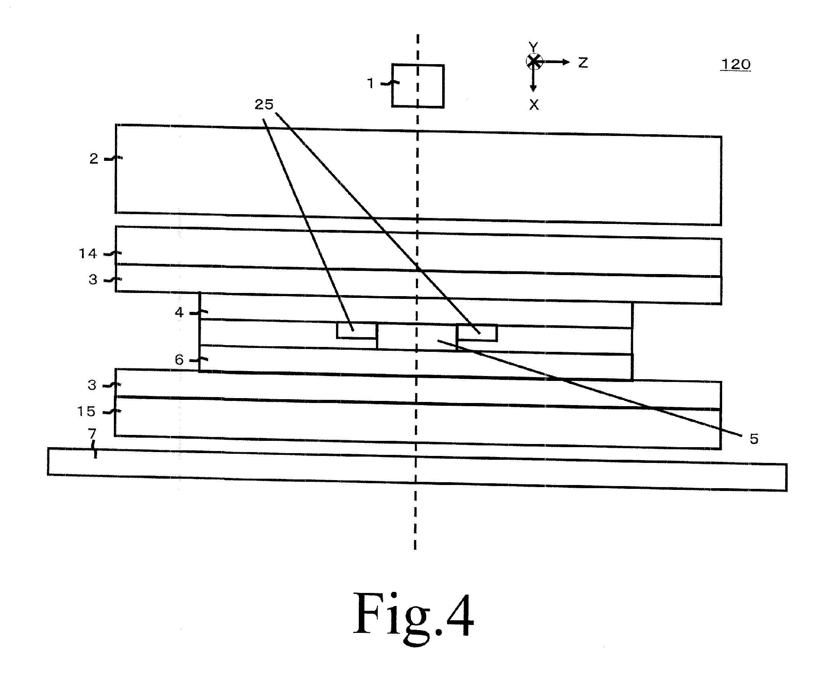

First, the read portion will be described in detail with reference to Figs. 4 to 6. Fig. 4 is a view showing the magnetic head 120, which is viewed from an air bearing surface side. A read portion 20 has the upper shield and electrode layer 4, the lower shield and electrode layer 6, and the magnetoresistive effect element 5 which is sandwiched therebetween in the thickness direction and which receives a leak magnetic field from the magnetic disk to generate a reproduced signal. In addition, the read portion 20 also has the upper shield layer 14 and the lower shield layer 15, which are disposed to sandwich the upper shield and electrode layer 4 and the lower shield and electrode layer 6 from both sides with insulating layers 3 provided therebetween. The upper shield and electrode layer 4, the lower shield and electrode layer 6, the upper shield layer 14, and the lower shield layer 15 are formed of NiFe. The insulating layers 3 are formed of Al₂O₃. The insulating layers 3 each prevent electrical short-circuiting between the shield layer and the shield and electrode layer. The reason the insulating layers 3 are provided is that when the shield layers and the respective shield and electrode layers are short-circuited, a sense current cannot be appropriately supplied to the magnetoresistive effect element 5. Furthermore, Al₂O₃ used for forming the insulating layers is not likely to generate heat, which is caused by contact, as compared to NiFe used for forming the shield layers and the shield and electrode layers.

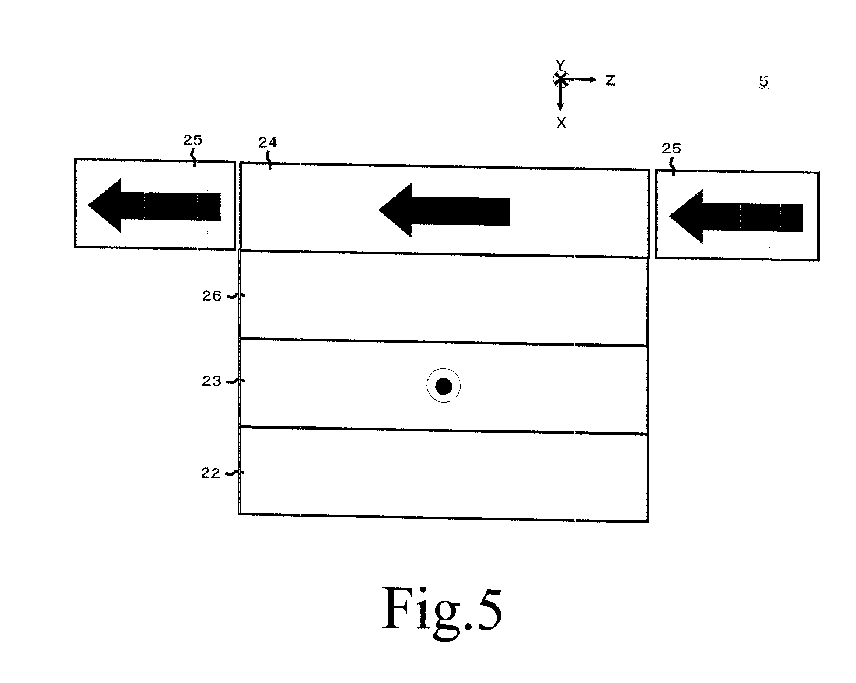

The lower shield and electrode layer 6 and the upper shield and electrode layer 4 form a gap for improving reproduction ability. That is, a magnetic flux other than that to be supplied from the magnetic disk 9 to the magnetoresistive effect element 5 is absorbed by the lower shield and electrode layer 6 and the upper shield and electrode layer 4, so that an unnecessary magnetic flux is prevented from being supplied to the magnetoresistive effect element 5. In addition, the lower shield and electrode layer 6 and the upper shield and electrode layer 4 absorb a magnetic flux passing through the magnetoresistive effect element 5. Furthermore, although being not particularly shown in the figure, a current source is connected to the lower shield and electrode layer 6 and the upper shield and electrode layer 4, and a sense current is supplied to the magnetoresistive effect element 5. The voltage between a pair of terminals is changed in accordance with the change in resistance of the magnetoresistive effect element 5, and hence the magnetic information recorded on the magnetic disk 9 can be reproduced as a voltage signal. The magnetoresistive effect element 5 will be described below with reference to Fig. 5.

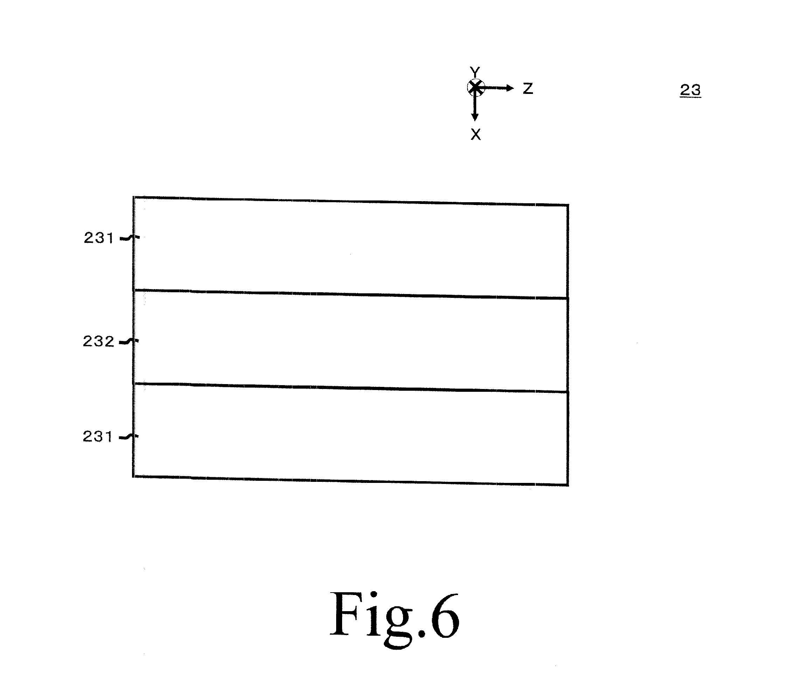

As shown in Fig. 5, the magnetoresistive effect element 5 of the present invention is a tunnel-effect type magnetoresistive effect element composed of an antiferromagnetic layer 22, a ferromagnetic pinned layer 23, an insulating barrier layer 26, and a ferromagnetic free layer 24 laminated in that order from the lower shield and electrode layer 6 side. The pin layer 22 is formed of an antiferromagnetic material such as Pt, Pd, or Mn. The free layer 24 is a ferromagnetic layer showing soft magnetic properties and is formed, for example, of Fe, Co, Ni, CoFe, NiFe, or CoZrNb. Although the pinned layer 23 is shown to have a single layer structure in the figure, it is actually formed to have a three layer structure made of CoFe, Ru, and CoFe as shown in Fig. 6. The barrier layer 26 is formed of Al₂O₃. In addition, longitudinal hard bias layers 25 are formed at two sides of the magnetoresistive effect element 5. The longitudinal bias layers 25 each have its magnetization in the direction shown in the figure. Hence, the magnetization of the free layer 24 provided between the longitudinal bias layers 25 is semi-fixed in the direction shown in the figure. The pinned layer 23 is magnetized in the direction shown in the figure by the pin layer 22. In a tunnel-effect type magnetoresistive effect element, the barrier layer 26 is generally provided. By a leak magnetic field from the magnetic disk 9, the magnetization direction of the free layer 24 is changed, and hence the current by the tunnel effect is changed. In addition, the magnetization direction of the pinned layer 23 and that of the free layer 24 are orthogonal to each other in the state in which no signal is input.

As described above, in the magnetoresistive effect element 5, the resistance thereof is changed in accordance with the change in leak magnetic field. Accordingly, as described above, in accordance with the change in resistance of the magnetoresistive effect element 5, the voltage between a pair of terminals is changed, and as a result, magnetic information recorded on the magnetic disk 9 can be reproduced as a voltage signal. In addition, as shown by the arrows in Fig. 3, the gap formed between the lower shield and electrode layer 6 and the upper shield and electrode layer 4 is called a read gap. As the recording density of the magnetic disk is increased, the width recording one bit is narrowed. Hence, the read gap is also narrowed, and a magnetic flux other than that to be supplied to the magnetoresistive effect element 5 is absorbed by the shield and electrode layers.

The lower shield layer 15 and the upper shield layer 14 are formed outside the lower shield and electrode layer 6 and the upper shield and electrode layer 4, respectively, with the respective insulating layers 3 provided therebetween, so that the read portion is formed. Since the magnetic flux other than that to be supplied from the magnetic disk to the magnetoresistive effect element 5 is absorbed by the lower shield layer 15 and the upper shield layer 14, an unnecessary magnetic flux is prevented from being supplied into the magnetoresistive effect element 5. In addition, the lower shield layer 15 and the upper shield layer 14 absorb a magnetic flux passing through the magnetoresistive effect element 5. As described above, according to an embodiment of the present invention, since the lower shield layer 15 and the upper shield layer 14 are formed outside the lower shield and electrode layer 6 and the upper shield and electrode layer 4, respectively, the shielding effect is enhanced.

The write portion will be described in detail with reference to Figs. 3 and 4. The write portion includes the upper magnetic pole 1, the coil 8, and the lower magnetic pole 2. An insulating layer is formed around the coil 8, and on the insulating layer, the upper magnetic pole 1 composed of a soft magnetic material is formed. The coil 8 is provided between the upper magnetic pole 1 and the lower magnetic pole 2. The upper magnetic pole 1 and the lower magnetic pole 2 form a magnetic circuit around the coil 8. When current is applied to the coil 8, a magnetic flux is generated. Subsequently, the magnetic flux flows between the lower magnetic pole 2 and the upper magnetic pole 1 and is supplied outside. By the magnetic flux thus supplied outside, the magnetization direction of the magnetic disk 9 is changed, so that information is written. That is, since current modulated by information to be recorded is allowed to flow in the coil 8, a magnetic field is induced in accordance with the current, so that the information can be recorded on the magnetic disk 9.

Subsequently, the shapes of the individual members will be described with reference to Fig. 4. When viewed from the air bearing surface, the lower shield layer 15 has a width of 40 to 100 µm, a depth of 20 to 40 µm, and a thickness of 1.0 to 2.0 µm, and the upper shield layer 14 has a width of 40 to 100 µm, a depth of 20 to 40 µm, and a thickness of 1.0 to 2.0 µm. The widths of the upper shield and electrode layer 4 and the lower shield and electrode layer 6 are smaller than those of the upper shield layer 14 and the lower shield layer 15 and are each in the range of 10 to 20 µm. The thickness of the shield and electrode layer is smaller than that of the shield layer and is 2.0 µm or less. In addition, the thickness of the insulating layer 3 is in the range of 0.25 to 0.5 µm. In addition, in Fig. 4, the width is in a Z direction, the thickness is in an X direction, and the depth is in a Y direction.

### Embodiment 2:

In Embodiment 1, the structure is described in which the lower shield and electrode layer 6 and the upper shield and electrode layer 4 are formed to sandwich the magnetoresistive effect element 5 in the thickness direction; however, another structure may also be formed.

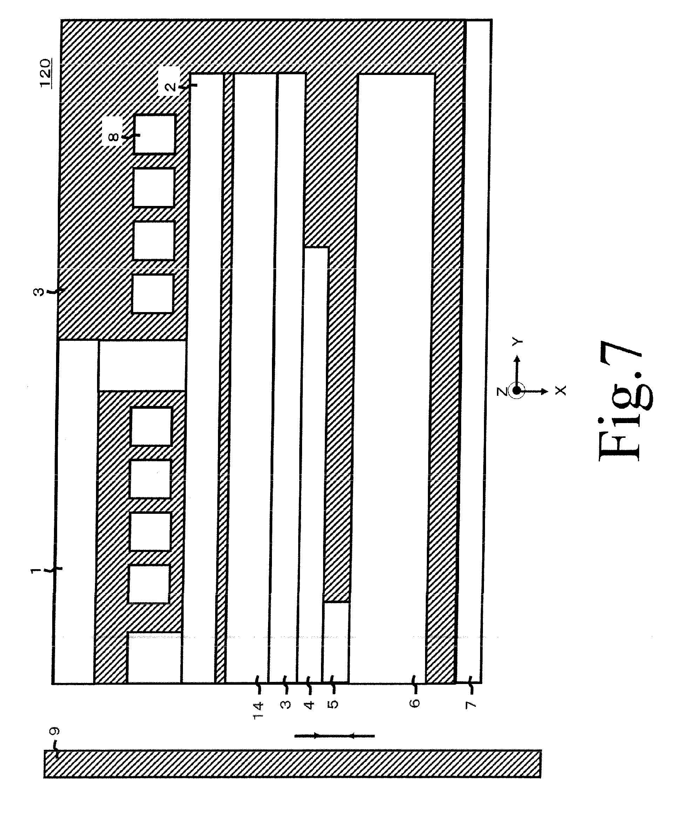

Fig. 7 is a cross-sectional view of a magnetic head 120 of Embodiment 2 taken along a direction perpendicular to an air bearing surface thereof. In this magnetic head 120, a lower shield and electrode layer 6 and an upper shield and electrode layer 4 are formed on a substrate 7 made of AlTiC (Al₂O₃-TiC) to sandwich a magnetoresistive effect element 5 in a lamination direction. In addition, an upper shield layer 14 is formed outside the upper shield and electrode layer 4. On the upper shield layer 14, a lower magnetic pole 2 of a write head is formed, and a writing coil 8 and an upper magnetic pole 1 are formed, so that the magnetic head 120 is formed.

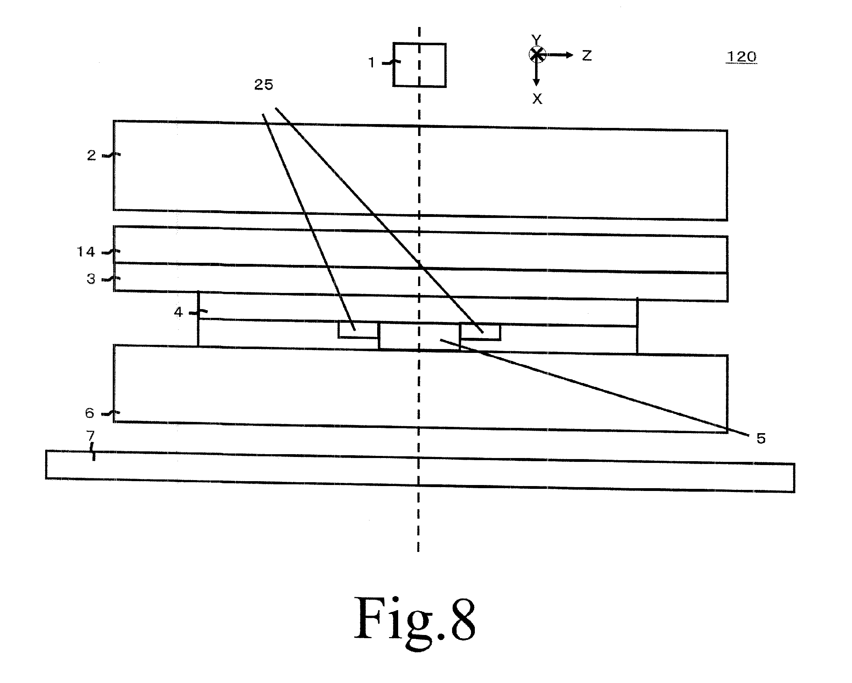

The lower shield and electrode layer 6, the magnetoresistive effect element 5, the upper shield and electrode layer 4, and the upper shield layer 14 form a read portion. In addition, the lower magnetic pole 2, the coil 8, and the upper magnetic pole 1 form a write portion. The lower shield and electrode layer 6, the upper shield and electrode layer 4, the upper shield layer 14, and the lower magnetic pole 2 are sequentially formed by patterning and are laminated with insulating layers of alumina (Al₂O₃) or the like provided therebetween. In addition, in Figs. 7 and 8, particularly necessary insulating layers are shown.

First, the read portion will be described in detail with reference to Fig. 7. Fig. 7 is a view showing the magnetic head 120, which is viewed from the air bearing surface side. A read portion 20 has the upper shield and electrode layer 4, the lower shield and electrode layer 6, and the magnetoresistive effect element 5 which is sandwiched therebetween in the thickness direction and which receives a leak magnetic field from a magnetic disk to generate a reproduced signal. In addition, the read portion 20 also has the upper shield layer 14 which is disposed outside the upper shield and electrode layer 4 with an insulating layer 3 provided therebetween. As described above, in an embodiment of the present invention, since the upper shield layer 14 is also formed outside the upper shield and electrode layer 4, the shielding effect is enhanced.

The lower shield and electrode layer 6 and the upper shield and electrode layer 4 form a gap for improving reproduction ability. That is, a magnetic flux other than that to be supplied from the magnetic disk to the magnetoresistive effect element 5 is absorbed by the lower shield and electrode layer 6 and the upper shield and electrode layer 4, so that an unnecessary magnetic flux is prevented from being supplied to the magnetoresistive effect element 5. In addition, the lower shield and electrode layer 6 and the upper shield and electrode layer 4 absorb a magnetic flux passing through the magnetoresistive effect element 5. Furthermore, although being not particularly shown in the figure, a current source is connected to the lower shield and electrode layer 6 and the upper shield and electrode layer 4, and a sense current is supplied to the magnetoresistive effect element 5. The voltage between a pair of terminals is changed in accordance with the change in resistance of the magnetoresistive effect element 5, and hence the magnetic information recorded on the magnetic disk 9 can be reproduced as a voltage signal. The magnetoresistive effect element 5 of this embodiment is the same as that described with reference to Fig. 5, and hence the description thereof is omitted.

Since the write portion is the same as that described in Embodiment 1, the description thereof is omitted.

Subsequently, the shapes of the individual members will be described with reference to Fig. 8. When viewed from the air bearing surface, the lower shield and electrode layer 6 has a width of 40 to 100 µm, a depth of 20 to 40 µm, and a thickness of 1.0 to 2.0 µm, and the upper shield layer 14 has a width of 40 to 100 µm, a depth of 20 to 40 µm, and a thickness of 1.0 to 2.0 µm. The width of the upper shield and electrode layer 4 is smaller than that of the upper shield layer 14 and is in the range of 10 to 20 µm. The thickness of the upper shield and electrode layer 4 is smaller than that of the shield layer and is 2.0 µm or less. In addition, the thickness of the insulating layer 3 is in the range of 0.25 to 0.5 µm. In addition, in Fig. 8, the width is in a Z direction, the thickness is in an X direction, and the depth is in a Y direction.

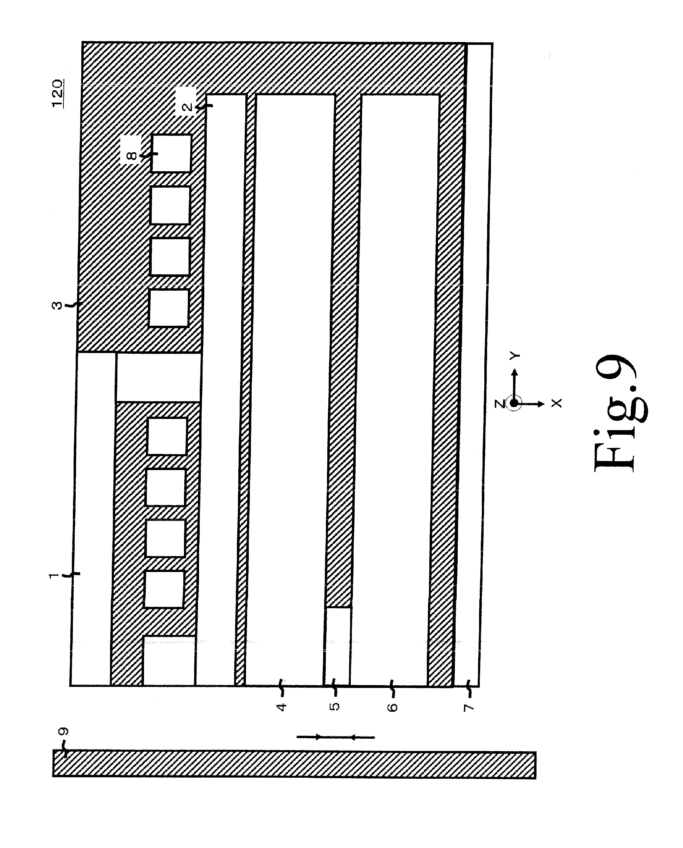

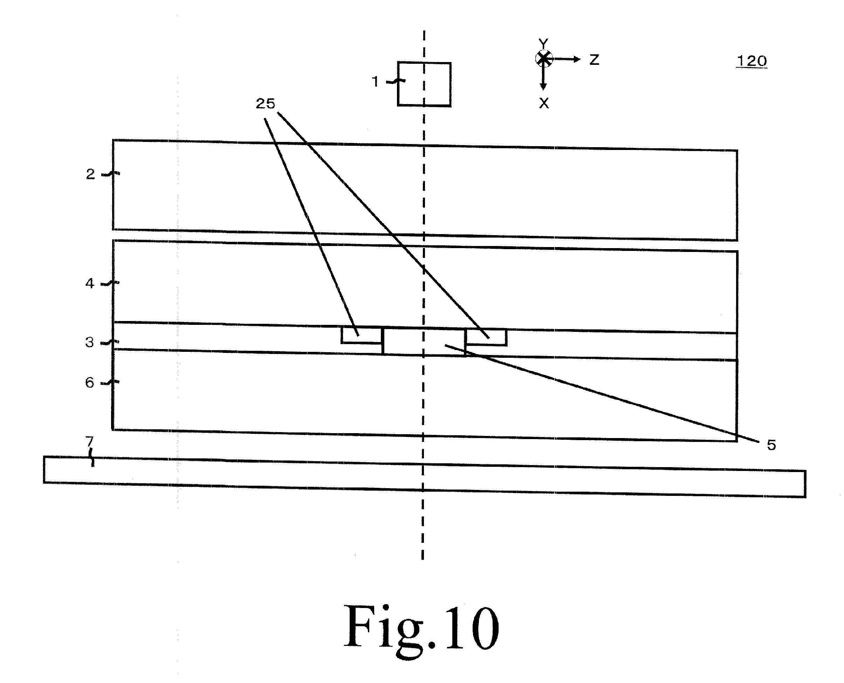

Finally, advantages of embodiments of the present invention will be described. For example, with reference to a magnetic head shown in Figs. 9 and 10, the advantages of the magnetic head according to embodiments of the present invention will be described. Fig. 9 is a cross-sectional view of the magnetic head taken along a direction perpendicular to an air bearing surface thereof, and Fig. 10 is a view of the magnetic head viewed from the air bearing surface side. In Figs. 9 and 10, the width is in a Z direction, the thickness is in an X direction, and the depth is in a Y direction.

In a magnetic head 120 shown in Figs. 9 and 10, a lower shield and electrode layer 6 and an upper shield and electrode layer 4 are formed on a substrate 7 made of AlTiC (Al₂O₃-TiC) to sandwich a magnetoresistive effect element 5 in a lamination direction. In addition, a lower magnetic pole 2 of a write head is formed on the upper shield and electrode layer 4, and a writing coil 8 and an upper magnetic pole 1 are formed, so that the magnetic head 120 is formed. The lower shield and electrode layer 6, the upper shield and electrode layer 4, and the lower magnetic pole 2 are sequentially formed by patterning and are laminated with insulating layers of alumina (Al₂O₃) or the like provided therebetween.

As shown in Figs. 3 and 9, the air bearing surface of the magnetic head may be brought into contact with the magnetic disk 9 in some cases. Heat generated by the contact causes damage to the magnetoresistive effect element 5. In this case, the damage to the element indicates the case in which the magnetization direction is not fixed since the pin layer 22, the pinned layer 23, the barrier layer 26, and the free layer 24 are molten by heat and mixed together or since coupling between the pin layer 22 and the pinned layer 23 is destroyed by heat.

In the magnetic head shown in Fig. 9, the widths of the upper shield and electrode layer 4 and the lower shield and electrode layer 6, which sandwich the magnetoresistive effect element 5, are larger than the widths of the upper shield and electrode layer 4 and the lower shield and electrode layer 6, which are shown in Fig. 3, and in addition, the thicknesses of the shield and electrode layers in Fig. 9 are also larger than those shown in Fig. 3. Hence, the area of the air bearing surface to be brought into contact with the magnetic disk 9 is increased, and heat generated thereby is also increased. As a result, heat applied to the magnetoresistive effect element 5 is unfavorably increased. On the other hand, in the magnetic head according to an embodiment of the present invention, the widths of the shield and electrode layers which sandwich the magnetoresistive effect element 5 are small, and the thicknesses thereof are also small. Hence, the area of the air bearing surface to be brought into contact with the magnetic disk 9 is decreased, and heat generated thereby is also decreased. As a result, heat applied to the magnetoresistive effect element 5 is also decreased. Furthermore, since the shield layers are provided outside the shield and electrode layers with the insulating layers 3 provided therebetween, even when the shield layer is brought into contact with the magnetic disk 9, heat is not likely to be applied to the magnetoresistive effect element 5 because it is transmitted through the insulating layer 3. In addition, since the insulating layer 3 is formed of Al₂O₃, compared to the shield and electrode layer and the shield layer, which are made of NiFe, heat is not likely to be generated by contact with the magnetic disk 9.

As described above, in an embodiment of the present invention, since the shield layer is formed outside of at least one of the upper shield and electrode layer 4 and the lower shield and electrode layer 6, the structure having a high shielding effect is formed. Furthermore, compared to NiFe forming the shield layer and the shield and electrode layer, Al₂O₃ forming the insulating layer is not likely to generate heat by contact with the magnetic disk, and heat is not likely to be transmitted through Al₂O₃. Hence, even when the air bearing surface of the magnetic head is brought into contact with the magnetic disk, heat is not likely to be generated from the insulating layer, and even when the upper shield layer 14 and the lower shield layer 15, which are provided outside, are brought into contact with the magnetic disk and generate heat, the heat thus generated is unlikely to be transmitted to the upper shield and electrode layer 4 and the lower shield and electrode layer 6 by the presence of the insulating layers 3. Accordingly, heat transmitted to the magnetoresistive effect element is decreased, and hence the element is not easily damaged.

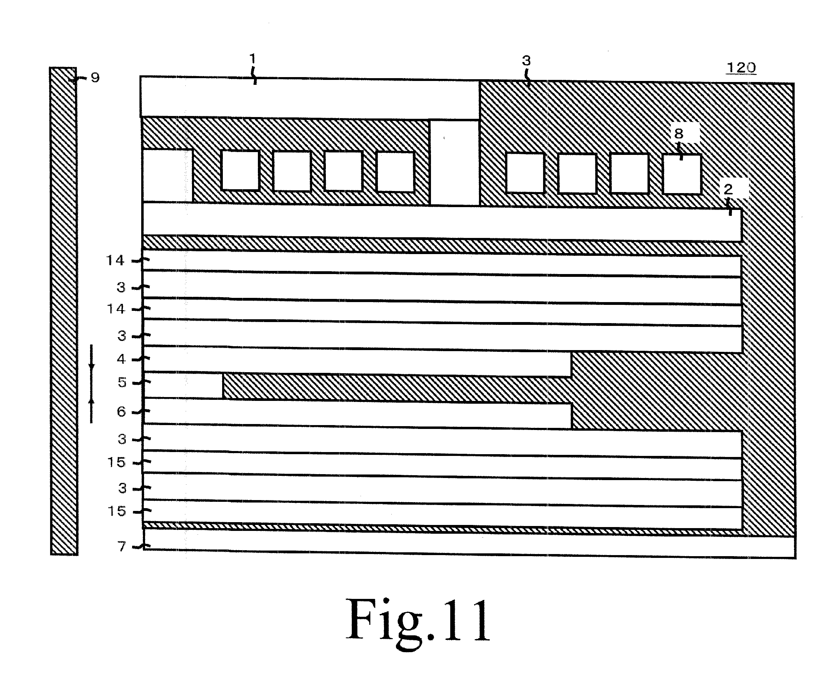

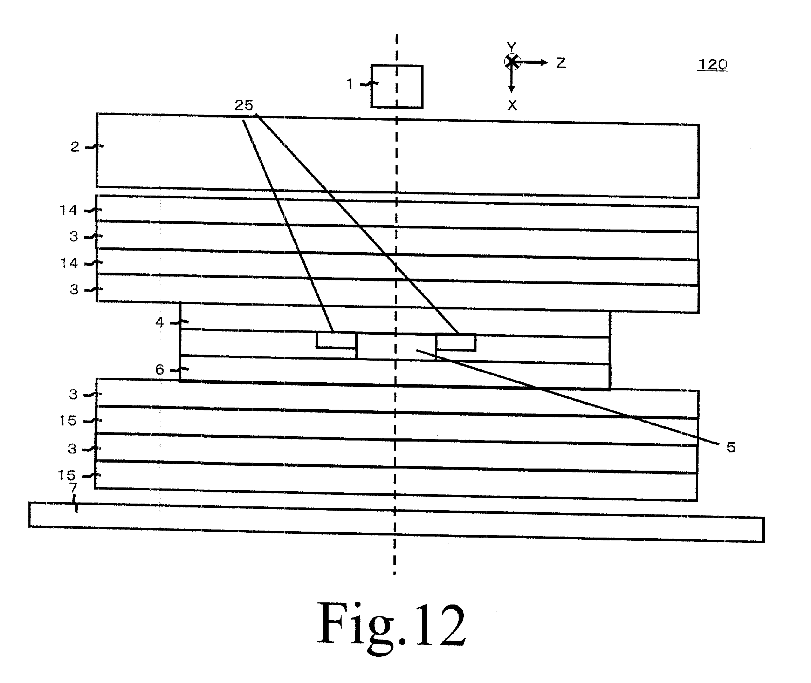

The above embodiments are described in detail in order to facilitate the understanding of the present invention, and the present invention is not limited thereto. Hence, modifications thereof may be made without departing from the spirit and the scope of the present invention. For example, in Embodiment 2, the structure is formed in which the shield layer is formed only outside the upper shield and electrode layer 4; however, the structure may be formed in which the shield layer is formed only outside the lower shield and electrode layer 6. In addition, for example, as shown in Figs. 11 and 12, outside a shield layer disposed on an insulating layer, a shield layer may be further disposed with an insulating layer provided therebetween.

## Claims

1. A magnetic sensor having a magnetoresistive element for obtaining information on the basis of a magnitude of magnetic flux generated from a medium, the magnetic sensor comprising:
two electrode layers composed of a magnetic material, sandwiching the magnetoresistive element, for applying a current to the magnetoresistive element;
at least one shield layer for shielding the magnetroresistive element from the magnetic flux, located opposite to a surface of at least one of the electrode layers facing the magnetoresistive element; and
at least one insulating layer for thermally insulating said magnetroresistive element from the shield layer, located between said at least one of the electrode layers and the shield layer.

2. The magnetic sensor of Claim 1, wherein the shield layers located opposite to surfaces of the electrode layers facing the magnetoresistive element, and
the insulating layers located between the electrode layers and the shield layers.

3. The magnetic sensor of Claim 1, wherein said at least one of the electrode layers located between said at least one shield layer and said at least one insulating layer, having a width smaller than a width of the shield layer.

4. The magnetic sensor of Claim 1, wherein said at least one of the electrode layers located between said at least one shield layer and said at least one insulating layer, having a thickness smaller than a thickness of the shield layer.

5. A memory device, comprising:
a medium for storing information;
a sensor having:
two electrode layers composed of a magnetic material, sandwiching the magnetoresistive element, for applying a current to the magnetoresistive element;
at least one shield layer for shielding the magnetroresistive element from the magnetic flux, located opposite to a surface of at least one of the electrode layers facing the magnetoresistive element; and
at least one insulating layer for thermally insulating said magnetroresistive element from the shield layer, located between said at least one of the electrode layers and the shield layer; and
a magnetic head having the sensor for obtaining said information on the basis of a magnitude of magnetic flux generated from the medium.

6. The memory device of claim 5, wherein a gap between the electrode layers is smaller than a width of a unit of the medium recording information.

7. The memory device of claim 5, wherein said at least one of the electrode layers located between said at least one shield layer and said at least one insulating layer, having a width smaller than a width of the shield layer.

8. The memory device of claim 5, wherein said at least one of the electrode layers located between said at least one shield layer and said at least one insulating layer, having a thickness smaller than a thickness of the shield layer.
